(19) Europäisches Patentamt / European Patent Office / Office européen des brevets

(11) **EP 3 414 589 B1**

(12) **EUROPÄISCHE PATENTSCHRIFT**

(45) Veröffentlichungstag und Bekanntmachung des Hinweises auf die Patenterteilung:
**08.04.2020   Patentblatt 2020/15**

(51) Int Cl.:
*G01S 3/16* *(2006.01)*        *G01S 13/74* *(2006.01)*

(21) Anmeldenummer: **17708691.5**

(22) Anmeldetag: **13.02.2017**

(86) Internationale Anmeldenummer:
**PCT/EP2017/053143**

(87) Internationale Veröffentlichungsnummer:
**WO 2017/137624 (17.08.2017 Gazette 2017/33)**

(54) **VORRICHTUNG ZUR BESTIMMUNG EINER POSITION EINES SENDERS UND ENTSPRECHENDES VERFAHREN**

DEVICE FOR DETERMINING A POSITION OF A TRANSMITTER AND CORRESPONDING METHOD

DISPOSITIF DE DÉTERMINATION D'UNE POSITION D'UN ÉMETTEUR ET PROCÉDÉ CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2016   DE 102016202205**
**20.07.2016   DE 102016213235**

(43) Veröffentlichungstag der Anmeldung:
**19.12.2018   Patentblatt 2018/51**

(73) Patentinhaber: **Fraunhofer-Gesellschaft zur Förderung der angewandten Forschung e.V.**
**80686 München (DE)**

(72) Erfinder:
• **SCHÜHLER, Mario**
**91090 Effeltrich (DE)**
• **WEISGERBER, Lars**
**02727 Ebersbach-Neugersdorf (DE)**
• **ARENDT, Johannes**
**91054 Erlangen (DE)**
• **WANSCH, Rainer**
**91083 Baiersdorf (DE)**
• **MILOSIU, Heinrich**
**91056 Erlangen (DE)**
• **OEHLER, Frank**
**91325 Adelsdorf (DE)**

(74) Vertreter: **Hersina, Günter et al**
**Schoppe, Zimmermann, Stöckeler Zinkler, Schenk & Partner mbB Patentanwälte Radlkoferstrasse 2 81373 München (DE)**

(56) Entgegenhaltungen:
**US-A- 4 654 667        US-A- 5 907 809**
**US-A1- 2010 309 058    US-A1- 2011 169 613**

• **GIANNI GIORGETTI ET AL: "Single-anchor indoor localization using a switched-beam antenna", IEEE COMMUNICATIONS LETTERS, IEEE SERVICE CENTER, PISCATAWAY, NJ, US, Bd. 13, Nr. 1, 1. Januar 2009 (2009-01-01) , Seiten 58-60, XP011241513, ISSN: 1089-7798, DOI: 10.1109/LCOMM.2009.081584**

EP 3 414 589 B1

**Beschreibung**

Die Erfindung bezieht sich auf eine Vorrichtung zur Bestimmung mindestens einer Information über eine Position eines Senders. Weiterhin bezieht sich die Erfindung auf ein Verfahren zur Bestimmung mindestens einer Information über eine Position mindestens eines Senders.

Im Bereich der Logistik und der Produktion finden immer häufiger hochfrequente Transponder ("radio-frequency identification" (RFID)-Transponder bzw. RFID-Tags) Anwendung, die eine Identifikation von Objekten erlauben. Typischerweise sind diese Transponder passiv und werden daher durch ein hochfrequentes elektromagnetisches Feld in Form eines Anregungssignals angeregt. Der Transponder nutzt das Signal und sendet in Antwort auf die Anregung ein moduliertes Signal zurück an das RFID-Lesegerät (RFID-Reader). Im Antwortsignal sind dabei Informationen des Transponders erhalten, die von dem Lesegerät ausgewertet werden. Damit kann ein Objekt über einen Transponder eindeutig identifiziert und zugeordnet werden.

Neben der Identifikation von Objekten ist auch die Lokalisierung der Objekte wünschenswert. Zunächst ist dazu eine Richtungsinformation zu ermitteln, die Auskunft darüber gibt, aus welcher Richtung relativ zur Position des Lesegeräts der Transponder seine Antwort zurücksendet. Durch Einsatz eines weiteren Lesegeräts, das räumlich getrennt von dem ersten ist, können die Richtungsinformationen beider herangezogen werden, um auch den Ort des Objekts in einer Ebene zu ermitteln. Eine räumliche Lokalisierung erfordert ein drittes Lesegerät.

Mit Hilfe dieser hochfrequenten Identifikation von Objekten und deren Lokalisierung können verschiedene Warenflussprozesse bedient und optimiert werden. Im Falle der automatisierten Erfassung von Objekten auf einer Palette, die durch eine Tordurchfahrt bewegt werden, erlaubt die Lokalisierung das automatische Erkennen der Richtung. So lassen sich beispielsweise Ein- und Ausfahrt unterscheiden.

Eine weitere Anwendung ist das Auffinden von verstauten, mit RFID-Transpondern versehenen Waren innerhalb eines Lagers.

Heutige Systeme, wie sie bei Tor-Durchfahrten bzw. Verfahreinheiten eingesetzt werden, bestehen üblicherweise aus einem Lesegerät mit einem bis vier und ggf. mehr Anschlüssen, die es erlauben, jeweils eine Antenne anzuschließen. Über diese Antennen lässt sich das hochfrequente Anregungssignal aussenden und lassen sich die Antwortsignale der Transponder empfangen.

Bei Lesegeräten mit einem einzelnen Anschluss wird in der Regel eine Antenne bestehend aus einem einzelnen Strahler angeschlossen. Dies ermöglicht lediglich die Erfassung der Transpondern und nicht die Ermittlung der Position oder der Richtung der Transponder. Sind mehrere Antennen mit dem Lesegerät verbunden, so wird in der Regel innerhalb des Lesegeräts sequentiell zwischen den Antennen umgeschaltet. Durch eine örtliche Verteilung der Antennen kann auf die Lage der Transponder geschlossen werden, allerdings ist die Richtungsinformation sehr ungenau bzw. mehrdeutig und zudem geht mit der Verteilung der Antennen ein hoher Platzbedarf und somit ein hoher Installationsaufwand einher.

Die Richtungsschätzung kann mit einem etablierten Algorithmus wie MUSIC ("Multiple Signal Characterization") oder ESPRIT ("Estimation of Signal. Parameters via Rotational Invariance Technique") ermittelt werden. Dazu sind von den empfangenen Signalen jeweils Betrag und Phase zu ermitteln. Typische RFID-Lesegeräte hingegen bieten diese Möglichkeit nicht, da sie zu jedem identifizierten Transponder lediglich ein Maß für die Amplitude der empfangenen Feldstärke liefern ("received signal strength indication", RSSI). Somit steht nur der Betrag und nicht die Phase zur Verfügung, so dass die bekannten Algorithmen nicht angewendet werden können.

In [1] wird ein RSSI-basiertes Verfahren zur Richtungsbestimmung in drahtlosen Netzwerken vorgestellt. Durch sukzessives Umschalten von Strahlungsdiagrammen mit abnehmender Keulenbreite kann der zu findende Sender einem Sektor zugeordnet werden. Die Auflösungsgenauigkeit der Einfallsrichtung ist dabei jedoch durch die schmalste Keulenbreite gegeben, was zu großen Antennenaperturen bzw. aufwendigen Keulenformungsnetzwerken führt.

Auch der in [2] präsentierte Ansatz ist hinsichtlich der Auflösungsgenauigkeit von der Keulenbreite abhängig. Eine fest eingestellte Hauptkeule wird dabei mechanisch geschwenkt, bis die Richtung mit dem stärksten RSSI-Wert gefunden wird.

Ein weiteres RSSI-basiertes Verfahren zeigt [3]. Hier wird durch die räumliche Anordnung der Antennen eine Zuordnung zwischen RSSI-Wert und Raumrichtung erreicht. Die Auflösung ist dabei abhängig von der Keulenbreite der einzelnen Strahler.

Ein RSSI-basierter Ansatz in Kombination mit dem Richtungsschätzalgorithmus MUSIC wird in [4] vorgestellt. Durch die Suche nach dem geeigneten Steering-Vektor wird auf die Signalkovarianzmatrix geschlossen, ohne dass eine Phaseninformation gemessen wird. Die Genauigkeit des Ansatzes hängt stark mit der Richtwirkung der einzelnen Antennen zusammen.

In der Patentschrift US 8,433,337 B2 wird ein Ansatz gezeigt, bei dem die Signale von zwei Antennen über einen 90°-Hybrid-Koppler und einen zusätzlichen schaltbaren Phasenschieber auf vier verschiedene Arten miteinander kombiniert werden. Die Phaseninformation wird dadurch in eine Amplitudeninformation umgewandelt, so dass sich aus den RSSI-Werten auf die Phasenbeziehung zwischen zwei Antennen schließen lässt. Auch bei mehr als zwei Antennen erfolgt stets eine paarweise Kombination, während die verschiedenen Paare nacheinander durchgeschaltet werden. Im Grunde wird also zwischen verschiedenen Richtcharakteristiken gewechselt, allerdings weisen diese eine geringe Richtwirkung auf, da lediglich zwei Elemente gleichzeitig "aktiv" sind. Unter Berücksichtigung von Rauschen können daher Mehrdeutigkeiten auftreten, die eine Richtungsbestimmung unmöglich machen können. Auch hier hängt die Genauigkeit von der Richtwirkung der Einzelelemente ab.

In [5] werden die Signale von vier Antennen kombiniert. Die Antennen werden über eine sogenannte Butler-Matrix an ein RFID-Lesegerät angeschlossen. Innerhalb des Lesegeräts wird zwischen den Eingangstoren der Butler-Matrix umgeschaltet. Aus den RSSI-Werten und den Eigenschaften der Butler-Matrix lässt sich auf den Einfallswinkel innerhalb einer Ebene schließen. Eine eindeutige räumliche Richtungsbestimmung, d. h. in zwei Ebenen, ist damit nicht möglich aufgrund der räumlichen Symmetrie der Richtcharakteristiken.

Aus der US 2010/309058 A1 ist ein System zum Anzeigen einer relativen Richtung eines Zielobjekts bekannt. Das System umfasst ein Antennenarray und Mittel zum Abfragen von Standortinformationen vom Zielobjekt.

Weiterhin ist aus der US 5 907 809 A ein System zum Bestimmen von Positionen bekannt. Dabei werden relative Leistungen von benachbarten Strahlungsbündeln ermittelt, welche mit einem Antennenarray erzeugt werden.

Die Aufgabe der Erfindung besteht darin, eine Vorrichtung und ein Verfahren zur Positionsermittlung eines Senders vorzuschlagen, die die Nachteile des Standes der Technik vermeiden.

Die Erfindung löst die Aufgabe mit einer Vorrichtung zur Bestimmung mindestens einer Information über eine Position mindestens eines Senders gemäß Anspruch 1 sowie mit einem Verfahren nach Anspruch 8.

Die Vorrichtung weist dabei eine Antennenvorrichtung, eine Signalverarbeitungsvorrichtung und eine Datenverarbeitungsvorrichtung auf. Die Antennenvorrichtung weist mehrere unterschiedliche Richtcharakteristiken auf, die sich jeweils zumindest auf eine Menge an räumlich unterschiedlichen Empfangsempfindlichkeiten der Antennenvorrichtung beziehen. Die Antennenvorrichtung empfängt die Signale somit nicht räumlich homogen, sondern je nach Richtcharakteristik bevorzugt aus unterschiedlichen Raumbereichen. Die Antennenvorrichtung ist derartig ausgestaltet, mit unterschiedlichen Richtcharakteristiken jeweils mindestens ein Signal von dem Sender zu empfangen. Da jede Richtcharakteristik mit einer eigenen Verteilung der Empfindlichkeit verbunden ist, werden auch die Signale des Senders als unterschiedliche Empfangssignale empfangen. Der Empfang mit den unterschiedlichen Richtcharakteristiken geschieht dabei in einer Ausgestaltung zeitlich versetzt und geschieht in einer anderen Ausgestaltung zeitgleich. Dabei wird in einer Ausgestaltung davon ausgegangen, dass der Sender die Signale jeweils im Wesentlichen mit der gleichen Signalstärke aussendet. Die Signalverarbeitungsvorrichtung ist derartig ausgestaltet, die von der Antennenvorrichtung empfangenen Signale zu verarbeiten und jeweils einen Amplitudenwert einer Feldstärke des empfangenen Signals zu ermitteln. Schließlich ist die Datenverarbeitungsvorrichtung derartig ausgestaltet, basierend auf den Richtcharakteristiken und den aus den jeweils zugeordneten empfangenen Signalen ermittelten Amplitudenwerten die Information über die Position des Senders zu ermitteln.

In der Vorrichtung werden somit mit unterschiedlichen Richtcharakteristiken Signale empfangen. Für die empfangenen Signale wird jeweils ein Amplitudenwert ermittelt, der dem entsprechenden Signal und damit auch der jeweiligen Richtcharakteristik zugeordnet ist. Die Richtcharakteristiken sind in einer Ausgestaltung mit einer Richtung einer Keule verbunden, so dass Signale auch primär aus dieser Richtung empfangen werden. Ausgehend von Daten der Richtcharakteristiken und dem jeweiligen Amplitudenwert wird dann die Information über die Position des Senders ermittelt.

In einer Ausgestaltung weist die Vorrichtung ergänzend eine Steuervorrichtung auf. Die Steuervorrichtung ist derartig ausgestaltet, unterschiedliche Richtcharakteristiken zum Empfangen von von dem Sender ausgehenden Signalen zu schalten. Daher ist die Datenverarbeitungsvorrichtung derartig ausgestaltet, basierend auf den geschalteten Richtcharakteristiken und den zugeordneten ermittelten Amplitudenwerten die Information über die Position des Senders zu ermitteln. Das Schalten der Richtcharakteristiken bedeutet in einer Ausgestaltung, dass nur die Signale der geschalteten Richtcharakteristik zur Signalverarbeitungsvorrichtung gelangen. In einer alternativen oder ergänzenden Ausgestaltung wird derartig in die Antennenvorrichtung eingegriffen, das lediglich mit der geschalteten Richtcharakteristik Signale empfangen werden können.

In einer Ausgestaltung dient die Steuervorrichtung auch dem Schalten der Richtcharakteristiken, über die ein Anregungssignal ausgesendet wird. Dies ist beispielsweise bei passiven Sendern, z. B. RFID-Transpondern, erforderlich. In einer Ausgestaltung gehen daher die Richtcharakteristiken auch mit einer räumlich unterschiedlichen Abstrahlungsverteilung einher.

Eine Ausgestaltung sieht vor, dass die Datenverarbeitungsvorrichtung derartig ausgestaltet ist, aus den ermittelten Amplitudenwerten in vektorieller Form und Daten über die Richtcharakteristiken eine Aussage über eine Richtung des Senders relativ zur Antennenvorrichtung als Information über die Position des Senders zu ermitteln. In dieser Ausgestaltung wird zumindest ermittelt, in welcher Richtung der Sender relativ zur Antennenvorrichtung positioniert ist. Aus den Amplitudenwerten und den Daten über die jeweilige Richtcharakteristik wird ein Empfangsvektor in konstruiert.

Eine Ausgestaltung beinhaltet, dass die Antennenvorrichtung derartig ausgestaltet ist, dass die Richtcharakteristiken jeweils ein globales Maximum aufweisen, das jeweils in einem durch ein Paar eines Azimutwinkels und eines Co-Elevationwinkels bestimmten eigenen Sektor in einem der Antennenvorrichtung zugeordneten Ausleuchtbereich liegt. In dieser Ausgestaltung wird jeweils ein Maximum - insbesondere in Bezug auf die Empfangsempfindlichkeit - der Richtcharakteristiken einem Sektor oder Bereich um die Antennenvorrichtung zugeordnet. Das bedeutet, dass jede Richtcharakteristik am stärksten Signale aus dem ihr jeweils zugeordneten Sektor empfängt. In einer Ausgestaltung gilt dies auch für das Aussenden von Signalen über die Antennenvorrichtung. Der Sektor ist dabei durch zwei Winkel definiert.

Eine Ausgestaltung sieht vor, dass die Antennenvorrichtung derartig ausgestaltet ist, dass die Richtcharakteristiken jeweils ein Nebenmaximum aufweisen, das jeweils in einem Sektor liegt, der sich von dem unterscheidet, in dem das globale Maximum liegt, und das einen vorgebbaren Pegelabstand zu einem Pegel des globalen Maximums aufweist. In dieser Ausgestaltung sind auch kleinere Nebenmaxima in Bezug auf die Empfangsempfindlichkeit vorgesehen, die sich in anderen Sektoren befinden. Dabei haben die Nebenmaxima jeweils einen vorgebbaren Pegelabstand zu dem Pegel des globalen Maximums. Der Pegel ist dabei ein beliebig zu definierendes Maß für die Empfangseigenschaft bzw. je nach Ausgestaltung auch für die Sendeeigenschaften der Antennenvorrichtung.

Eine Ausgestaltung beinhaltet, dass die Antennenvorrichtung derartig ausgestaltet ist, dass die Richtcharakteristiken jeweils ein Nebenmaximum aufweisen, das jeweils in dem gleichen Sektor wie das globale Maximum liegt, und das einen vorgebbaren Pegelabstand zu einem Pegel des globalen Maximums aufweist. In dieser Ausgestaltung liegen die Nebenmaxima im gleichen Sektor wie das jeweilige globale Maximum. Damit wird das Risiko des Empfangs aus benachbarten Sektoren weiter reduziert und daher auch die Eindeutigkeit der Ermittlung der Information über die Position des Senders erhöht.

Eine Ausgestaltung sieht vor, dass es sich bei der Signalverarbeitungsvorrichtung um ein RFID-Lesegerät handelt, das als Amplitudenwert der Feldstärke der empfangenen Signale einen "Received Signal Strength Indication"-Wert erzeugt. In der Ausgestaltung handelt es sich bei den Sendern insbesondere um RFID-Transponder, so dass die Signalverarbeitungsvorrichtung daher auch ein RFID-Lesegerät oder RFID-Reader ist.

In einer alternativen Ausgestaltung werden von der Vorrichtung Anregungssignale ausgesendet, die von dem Sender reflektiert werden.

Eine Ausgestaltung beinhaltet, dass die Signalverarbeitungsvorrichtung derartig ausgestaltet ist, den Sender zu identifizieren. Dies geschieht beispielsweise bei RFID-Transpondern über die in den Antwortsignalen übermittelten Identifikationsdaten.

Eine Ausgestaltung sieht vor, dass die Vorrichtung eine Signalquelle aufweist. Dabei ist die Signalquelle derartig ausgestaltet, ein Anregungssignal zu erzeugen. Weiterhin ist die Steuervorrichtung derartig ausgestaltet, jeweils eine Richtcharakteristik für das Abstrahlen des Anregungssignals zu schalten. In einer alternativen Ausgestaltung wird das Anregungssignal ohne die Steuervorrichtung ungerichtet ausgestrahlt. Das Anregungssignal stellt in einer Ausgestaltung für den Sender die notwendige Energie zur Verfügung, um Signale aussenden zu können. Alternativ wird das Anregungssignal vom Sender reflektiert, so dass der Sender rein passiv ist. Im alternativen Fall werden also - wie beispielsweise beim Radar - Signale nur (passiv) reflektiert.

Eine Ausgestaltung beinhaltet, dass die Steuervorrichtung derartig ausgestaltet ist, die für das Abstrahlen des Anregungssignals geschaltete Richtcharakteristik als Richtcharakteristik für das Empfangen des von dem Sender ausgehenden Signals zu schalten. In dieser Ausgestaltung wird das Anregungssignal mit einer Richtcharakteristik gesendet und wird das Empfangssignal mit der gleichen Richtcharakteristik empfangen. Daher wird ein Raumbereich besonders mit dem Anregungssignal bedacht und wird das Signal im Wesentlichen nur aus diesem Raumbereich empfangen.

In einer weiteren Variante handelt es sich um einen aktiven Sender, der von sich aus Signale aussendet. Diese Signale werden von der Antennenvorrichtung empfangen und anschließend für die Ermittlung der Richtungsinformation verwendet. In einer Variante ist die Vorrichtung somit nur empfangend.

Eine Ausgestaltung sieht vor, dass die Antennenvorrichtung mehrere Antennenelemente aufweist. In einer Ausgestaltung ist jedes Antennenelement mit einer Richtcharakteristik verbunden. Dabei sind die Antennenelemente in einer Ausgestaltung Teile einer Patchantennen und handelt es sich alternativ um Dipolantennen, Monopolantennen, monopolartige Antennen, Chip-Antennen oder Schleifenantennen.

Eine Ausgestaltung beinhaltet, dass die Antennenvorrichtung ein Speisenetzwerk aufweist, das unterschiedliche Richtcharakteristiken der Antennenvorrichtung bewirkt. Das Speisenetzwerk ist beispielsweise als Butler-Matrix ausgestaltet.

Eine Ausgestaltung sieht vor, dass das Speisenetzwerk derartig ausgestaltet ist, von der Antennenvorrichtung empfangene Signale entsprechend den Richtcharakteristiken aufgeteilt auszugeben. In einer Ausgestaltung ist vorgesehen, dass die Antennenvorrichtung jeweils gleichzeitig Signale mit unterschiedlichen Richtcharakteristiken empfängt und dass das Speisenetzwerk alle empfangenen Signale jeweils den Richtcharakteristiken zugeordnet ausgibt. Es handelt sich also quasi um eine spektrale Zerlegung.

Eine Ausgestaltung beinhaltet, dass die Antennenvorrichtung als Mehrkeulenantenne ausgestaltet ist. Eine Mehrkeulen- oder Multibeam-Antennen verfügt über mehrere Richtcharakteristiken, die sich jeweils durch eine Keule auszeichnen. Die Keulen weisen dabei in einer Ausgestaltung in unterschiedliche Richtungen.

Weiterhin löst die Erfindung die Aufgabe durch ein Verfahren zur Bestimmung mindestens einer Information über eine Position mindestens eines Senders. Dabei werden mit unterschiedlichen Richtcharakteristiken von dem Sender ausgehende Signale empfangen. Die Richtcharakteristiken beziehen sich jeweils auf räumlich unterschiedliche Empfangsempfindlichkeiten, so dass die Signale des Senders mit den unterschiedlichen Richtcharakteristiken jeweils unterschiedlich stark empfangen werden. Aus den Feldstärken der empfangenen Signale wird jeweils ein Amplitudenwert ermittelt. Schließlich wird ausgehend von den Richtcharakteristiken - bzw. ausgehend von Daten, die die unterschiedlichen Empfindlichkeitsverteilungen beschreiben - und den Amplitudenwerten, die jeweils aus den zugeordneten empfangenen Signalen ermittelt worden sind, die Information über die Position des Senders ermittelt.

Dabei gelten die obigen Ausführungen und Ausgestaltungen zu der Vorrichtung entsprechend auch für das erfindungsgemäße Verfahren. Umgekehrt lassen sich auch Verfahrensschritte durch Ausgestaltungen der Vorrichtung realisieren, so dass auch die Ausführungen bezüglich des Verfahrens für die Vorrichtung gelten.

Die Erfindung sei noch einmal mit anderen Worten und bezogen auf einzelne Ausgestaltungen beschrieben.

So ergibt sich in einer Ausgestaltung ein Verfahren zur Ermittlung der komplexen Empfangsvektoren, um hiermit zumindest eine Richtungsschätzung von RFID-Transpondern mit Hilfe von RSSI-Werten zu ermöglichen. Das Verfahren basiert in einer Ausgestaltung auf der Kombination einer Antenne mit schaltbaren Richtcharakteristiken und einem RFID-Lesegerät, das zu Signalen, die von identifizierten Transpondern stammen, jeweils einen RSSI-Wert bereitstellt.

Im Einzelnen gibt es eine Vielzahl von Möglichkeiten, die erfindungsgemäße Vorrichtung und das erfindungsgemäße Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:

Fig. 1    eine skizzenhafte Darstellung einer erfindungsgemäßen Vorrichtung in Verbindung mit einem Sender,

Fig. 2    eine Skizze eines Ausleuchtbereichs und dessen Zerlegung in 16 Sektoren,

Fig. 3    eine Skizze über die Zuordnung der Richtcharakteristiken zu den Sektoren des Ausleuchtbereichs,

Fig. 4    eine schematische Darstellung einer alternativen Ausgestaltung der Vorrichtung.

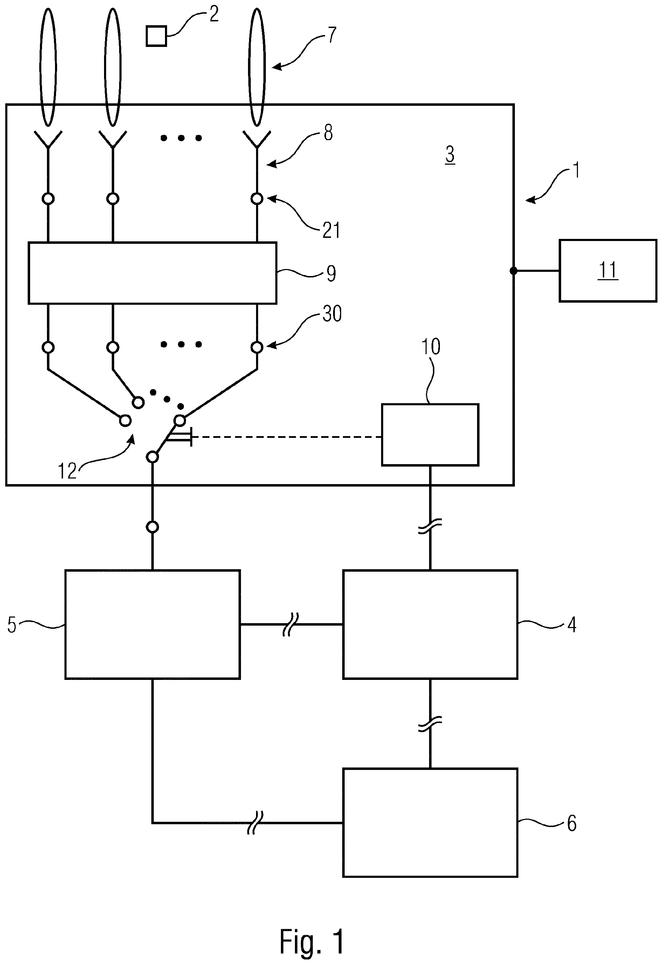

Die Fig. 1 zeigt eine Anwendung der erfindungsgemäßen Vorrichtung 1, die hier dazu verwendet wird, um die Position eines Senders 2 zu ermitteln.

Für diesen Zweck verfügt die Vorrichtung 1 über eine Antennenvorrichtung 3, die mehrere Antennenelemente 8 aufweist, über eine Steuervorrichtung 4, eine Signalverarbeitungsvorrichtung 5 sowie eine Datenverarbeitungsvorrichtung 6. Die Antennenvorrichtung 3 ist hier eine Mehrkeulen- bzw. Multibeam-Antenne.

Die Steuervorrichtung 4 wirkt auf die Antennenvorrichtung 3 ein, um vorzugeben, welche Richtcharakteristik 7 geschaltet werden soll, so dass das über diese Richtcharakteristik empfangene Signal der Signalverarbeitungsvorrichtung 5 zugeführt wird. Die von der Antennenvorrichtung 3 empfangenen Signale werden dabei durch das Speisenetzwerk 9 den einzelnen Richtcharakteristiken 7 zugehörig ausgegeben. Hier ist jedem der n Antennenelemente 8 der Antennenvorrichtung 3 eine Richtcharakteristik 7 und wiederum einer der n Antenneneingänge 21 (eine alternative Bezeichnung ist Ausgangstore) des Speisenetzwerks 9 zugeordnet. Die m Signaleingänge 20 des Speisenetzwerks 9 werden dabei jeweils über den dargestellten Schalter 12 einzeln mit der Signalverarbeitungsvorrichtung 5 verbunden, so dass auch nur das empfangene Signal dieser einen Richtcharakteristik weiterverarbeitet wird. Hiermit lässt sich dann eine bestimmte Richtcharakteristik $\vec{C}_k$ auswählen bzw. schalten.

Alternativ sind mehrere - hier nicht dargestellte - Signalverarbeitungsvorrichtungen 5 vorhanden, die jeweils ein mit einer Richtcharakteristik empfangenes Signal auswerten. Eine solche Ausgestaltung erlaubt daher eine parallele Auswertung von mit mehreren Richtcharakteristiken verbundenen Signalen. Für diese Ausgestaltung ist insbesondere vorgesehen, dass das Speisenetzwerk 9 z. B. als Butler-Matrix ausgeführt ist. Oder allgemein: Das Speisenetzwerk 9 stellt für jede Richtcharakteristik, mit der die Antennenvorrichtung 3 Signale empfangen hat, die jeweils entsprechend getrennten Signale zur Verfügung. Daher gibt in dieser Ausgestaltung das Speisenetzwerk 9 an den m Signaleingängen 20 jeweils die über eine zugeordnete Richtcharakteristik 7 empfangenen Signale aus. Die n Antennenelemente 8 sind dabei mit n Antenneneingängen 21 des Speisenetzwerks 9 verbunden.

In der dargestellten Ausgestaltung ist jedoch eine einzige Signalverarbeitungsvorrichtung 5 ausreichend, für die jeweils eine Richtcharakteristik 7 geschaltet wird, indem eine Verbindung zwischen dem Signaleingang 20 der jeweils gewünschten Richtcharakteristik 7 und der Signalverarbeitungsvorrichtung 5 hergestellt wird. Hier dienen die Signaleingänge 20 somit der Ausgabe der empfangenen Signale. Die Eigenschaft als Signaleingang 20 ergibt sich, da sie als Eingang für die Anregungssignale dienen.

Die Signalverarbeitungsvorrichtung 5 ermittelt aus den empfangenen Signalen jeweils einen Amplitudenwert der Feldstärke der Signale. Es wird also quasi ein Maß für die Signalstärke erzeugt. Gleichzeitig ergibt sich so pro Messung bzw. pro geschalteter Richtcharakteristik nur ein Wert.

In einer Ausgestaltung ist die Signalverarbeitungsvorrichtung 5 insbesondere so ausgestaltet, dass sie aus dem jeweils empfangenen Signal auch eine Information extrahiert, die der Sender dem von ihm ausgehenden Signal aufgeprägt hat. So handelt es sich bei den Informationen beispielsweise um Messwerte, die der Sender 2 überträgt oder beispielsweise zumindest um ein Identifikationszeichen des Senders 2.

Die Signalverarbeitungsvorrichtung 5 reduziert die empfangenen Signale insbesondere nur auf den Amplitudenwert, so dass die an sich komplexen Signale - mit Betrag und Phase - auf einen Messwert reduziert werden. Die mit dem Signal übertragene Information ist dabei getrennt von den physikalischen Eigenschaften zu betrachten.

Daher werden - unter Verwendung einer Steuerlogik 10, die hier ein Teil der Antennenvorrichtung 3 ist - mehrere Richtcharakteristiken 7 geschaltet und wird jeweils der Amplitudenwert ermittelt. Basierend auf den ermittelten Amplitudenwerten und dem Wissen um die Empfindlichkeitsverteilung der Richtcharakteristiken 7 wird anschließend die Position des Senders 2 ermittelt. Hierfür dient die Datenverarbeitungsvorrichtung 6, die ggf. auch über einen Datenspeicher, z. B. zum Abspeichern der Daten über die Richtcharakteristiken, verfügt.

Die Richtcharakteristiken 7 weisen jeweils durch ihre Keulenform eine Hauptrichtung auf. Daher werden durch die unterschiedlichen Richtcharakteristiken 7 Signale aus unterschiedlichen Richtungen und Bereichen empfangen, so dass letztendlich über die Amplitudenwerte und die zugehörigen Verteilungen der Empfangsempfindlichkeiten der Richtcharakteristiken - also aus den den Richtcharakteristiken zugeordneten und diese in Bezug auf ihre Empfangsempfindlichkeiten beschreibenden Daten - die Position des Senders 2 bestimmbar wird.

Es sei ein Beispiel betrachtet, in dem der Sender 2 in einem Bereich liegt, aus dem Signale nur mit einer Richtcharakteristik 7 empfangen werden können. Daher lässt sich nur mit dieser Richtcharakteristik ein Signal empfangen bzw. nur mit dieser Richtcharakteristik ergibt sich ein Amplitudenwert ungleich Null. Daher kann aus den Amplitudenwerten auf die Richtung geschlossen werden, in der sich der Sender relativ zur Antennenvorrichtung 3 befindet.

Ist weiterhin ein Maß für die vom Sender 2 zu erwartende Feldstärke bekannt, so erlaubt in einer Ausgestaltung der ermittelte Amplitudenwert auch eine Aussage über den Abstand zur Antennenvorrichtung, insofern beispielweise die Empfangsempfindlichkeit mit wachsendem Abstand abnimmt.

Zudem verfügt die Vorrichtung 1 hier über eine Signalquelle 11, um unter Verwendung der unterschiedlichen Richtcharakteristiken Anregungssignale in Richtung des Senders 2 zu senden. Hierdurch kann der Sender 2 rein passiv sein, indem es sich z. B. um einen RFID-Tag handelt, der mit einem Antwortsignal auf das Anregungssignal reagiert. Oder es handelt sich beispielsweise um eine Radar-Anwendung, in welcher die von dem Sender 2 ausgehenden Signale Reflexionssignale sind. In einer - nicht dargestellten - Ausgestaltung ist die Signalquelle 11 ein Bestandteil der Signalverarbeitungsvorrichtung 5, die beispielsweise ein RFID-Lesegerät ist.

Bei der Signalverarbeitungsvorrichtung 5 handelt es sich für die Anwendung mit einem RFID-Tag als Sender 2 insbesondere um einen üblichen RFID-reader oder um ein sog. RFID-Lesegerät. Eine solche RFID-Lesevorrichtung 5 wertet ein von einem RFID-Tag stammendes Signal aus, indem sie zum einen die Daten extrahiert, die der RFID-Tag übermittelt, z. B. Identifikationsdaten, und indem sie zum anderen einen sogenannten "Received Signal Strength Indicator" (RSSI)-Wert erzeugt, der ein Indikator für die Feldstärke der empfangenen Signale ist.

Im Weiteren seien die technischen Grundlagen der Erfindung noch einmal erläutert.

Es wird ausgegangen von einem Gesamt-Raumbereich, in dem sich der Sender 2 befinden kann und der durch die Richtcharakteristiken der Antennenvorrichtung 3 abgedeckt wird.

Der Gesamt-Raumbereich bzw. Ausleuchtbereich $\Omega$ ist wie folgt gegeben:

$$\Omega = \left\{ \vec{\omega} = \begin{pmatrix} \phi \\ \theta \end{pmatrix} : \phi_l \leq \phi \leq \phi_u \ \& \ \theta_l \leq \theta \leq \theta_u \right\}$$

$$(1)$$

Dabei ist $\varphi$ der Azimutwinkel und $\theta$ der Co-Elevation-Winkel. Die Winkel haben jeweils eine unter Grenze $\varphi_l$ und $\theta_l$ sowie eine obere Grenze $\varphi_u$ und $\theta_u$. Es werden jeweils räumliche Sektoren $\Omega_{i,j}$ gebildet, mit denen jeweils eine Richtcharakteristik $\vec{C}_k$ der Antennenvorrichtung korrespondiert.

Die Richtcharakteristiken $\vec{C}_k$ zeichnen sich in einer Ausgestaltung dadurch aus, dass sie ihr globales Maximum in einem zugehörigen Sektor aufweisen. Zudem treten bis zu einem bestimmten vorgebbaren Pegelabstand unterhalb des globalen Maximums keine weiteren Maxima in einem der übrigen Sektoren auf.

Der Sektor $\Omega_{i,j}$ ist gegeben durch die Definition:

$$\Omega_{ij} = \left\{ \vec{\omega} = \begin{pmatrix} \phi \\ \theta \end{pmatrix} : \phi_{l,i} \leq \phi \leq \phi_{u,i} \ \& \ \theta_{l,j} \leq \theta \leq \theta_{u,j} \right\} \subset \Omega$$

$$(2)$$

$$\text{mit } i = 1, \dots \mu \text{ und } j = 1, \dots v. \tag{3}$$

Dabei gilt:

$$\Omega = \bigcup_{(i)} \bigcup_{(j)} \Omega_{ij} \tag{4}$$

Aus dem Zusammenhang (3) ergibt sich die Anzahl der Sektoren zu $\mu * v$.

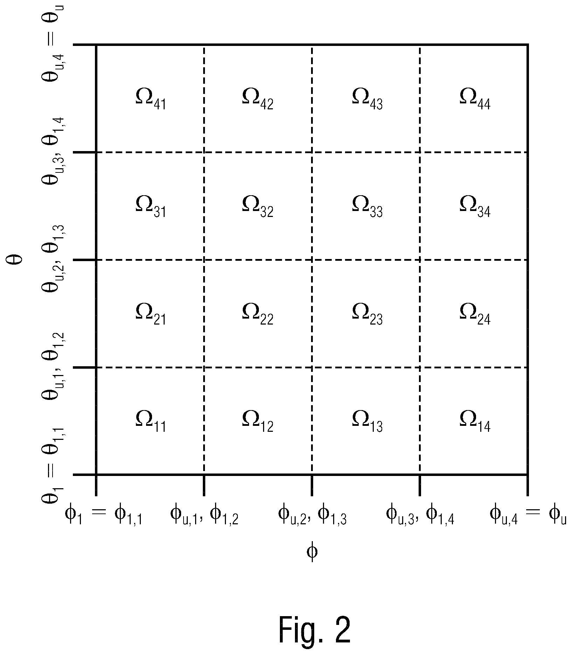

Die Fig. 2 zeigt beispielhaft die Einteilung des Ausleuchtbereichs $\Omega$ (gemäß der Definition (1)) in 16 Sektoren $\Omega_{ij}$ (gemäß der Definition in (2)) mit $\mu = v = 4$.

Dem Sektor $\Omega_{ij}$ ist folgende Richtcharakteristik zugeordnet:

$$\vec{C}_k = \vec{C}_k(\vec{\omega}) = \vec{C}_k(\phi, \theta) = \begin{pmatrix} C_k^{(co)} \\ C_k^{(cross)} \end{pmatrix} \qquad \text{mit } k = v * (j - 1) + i, \tag{5}$$

mit der co-polarisierten Komponente $C_k^{(co)}$ und der kreuzpolarisierten Komponente $C_k^{(cross)}$.

Die Richtcharakteristik weist ihr globales betragsmäßiges Maximum im Intervall $\varphi_{1,i} \leq \varphi \leq \varphi_{u,i}$ und $\theta_{1,j} \leq \theta \leq \theta_{u,j}$ auf.

Dabei lässt sich die Zuordnung zwischen $(i, j)$ und $k$ in der Zuordnung (5) beliebig wählen, sofern gilt: $\max\{k\} = \mu * v$. Eine alternative Zuordnung ist: $k = \mu * (i - 1) + j$.

Die Richtcharakteristiken werden durch ein entsprechendes Speisenetzwerk 9 eingestellt. Jeder Signaleingang (alternative Bezeichnung ist: Eingangstor) 20 des Speisenetzwerks 9 korrespondiert dabei mit einer bestimmten Richtcharakteristik 7, wie in Fig. 1 für eine Mehrkeulenantenne skizziert.

Bei den Richtcharakteristiken $\vec{C}_k$ handelt es sich insbesondere um sogenannte Torrichtcharakteristiken. Das Speisenetzwerk 9 ist in einer Ausgestaltung ein Eigenmode-Netzwerk (siehe z. B. [6]). In einer weiteren Ausgestaltung ist das Speisenetzwerk 9 als Butler-Matrix (siehe z. B. [7]) realisiert, deren Signaleingänge 20 mit zueinander orthogonalen Speisevektoren korrespondieren. Alternativ handelt es sich um ein Netzwerk 9, das beliebig zueinander orientierte Speisevektoren erzeugt.

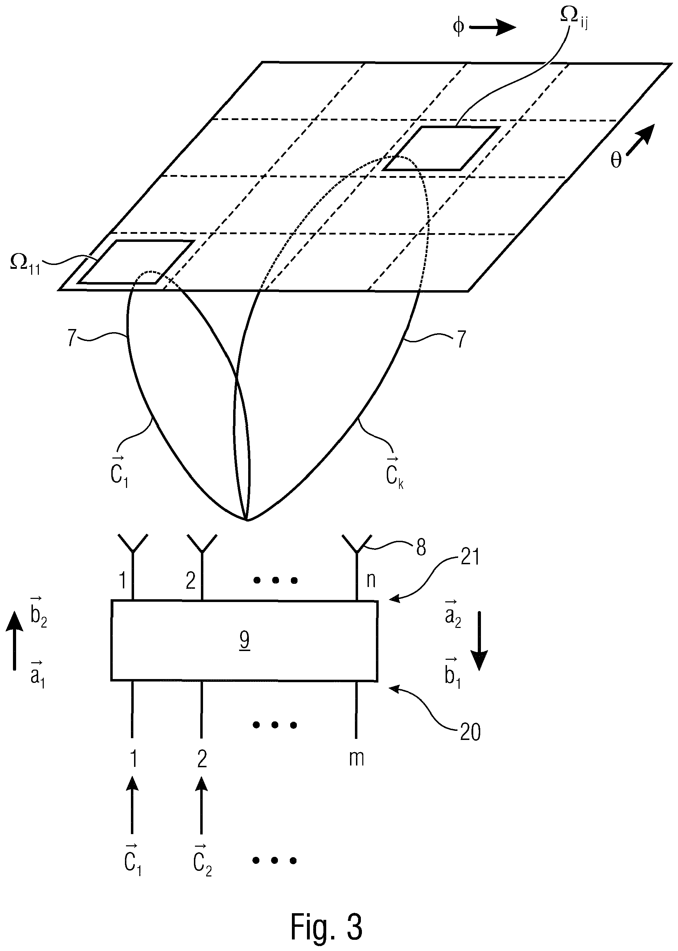

In der Fig. 3 korrespondiert jedes Tor am Eingang (also jeder Signaleingang) 20 der Antennenvorrichtung 3 bzw. des Speisenetzwerks 9 mit einer Richtcharakteristik $\vec{C}_k$ gemäß Gleichung (5), die zu einem Strahlungsmaximum im Sektor $\Omega_{ij}$ (gemäß der Gleichung (2)) führt.

Dabei verfügt die hier beispielhafte Mehrkeulenantenne als Antennenvorrichtung 3 über $n$ Antennenelemente, die an den $n$ Antenneneingängen 21 des Speisenetzwerks 9 angeschlossen und über die $m$ Signaleingänge 20 angeregt bzw. geschaltet werden.

In Verbindung mit Fig. 3 (siehe die beiden Vektoren auf der linken Seite mit dem Pfeil nach oben) wird im Folgenden das Aussenden von Signalen über die Antennenvorrichtung bzw. dessen Antennenelemente 8 beschrieben.

Es sei

$$\vec{a}_{1,k} = \begin{pmatrix} 0 \\ \vdots \\ 1 \\ \vdots \\ 0 \end{pmatrix} \tag{6}$$

der Eingangsvektor, der nur das $k$-te Eingangstor 20 (untere Ebene des Speisenetzwerks 9) anregt. Mit der Streumatrix des Speisenetzwerks 9

$$\tilde{S} = \begin{pmatrix} \tilde{S}_{11} & \tilde{S}_{12} \\ \tilde{S}_{21} & \tilde{S}_{22} \end{pmatrix} \tag{7}$$

ergibt sich der Anregungsvektor am Ausgang des Netzwerks (obere Ebene mit den Antennenelementen 8) zu

$$\vec{b}_{2,k} = \vec{q}_k = \tilde{S}_{21}\, \vec{a}_{1,k} \tag{8}$$

mit dem Vektor $\vec{q}_k$, der die Richtcharakteristik $\vec{C}_k$ hervorruft.

Werden mehrere Signaleingänge 20 (eine alternative Bezeichnung ist Tore) gleichzeitig gespeist, so erfolgt eine gewichtete Überlagerung der zu den Toren 20 zugeordneten Richtcharakteristiken. Für die Ausstrahlung der Anregungssignale werden also die Richtcharakteristiken miteinander kombiniert.

Beim Beispiel der Fig. 3 (linke Seite) wird der Eingangsvektor $\vec{a}_1$ der Formel (8) als Vektor des Anregungssignals anteilig auf die Speisevektoren $\vec{q}_i$ aufgeteilt.

Der Empfangsfall wird anhand der auf der rechten Seiten befindlichen Vektoren (verbunden durch den schematischen Pfeil nach unten) der Fig. 3 erläutert, wobei der Eingangsvektor $\vec{a}_2$ entsprechend der Gleichung (9) in seine Anteile der einzelnen Richtcharakteristiken 7 zerlegt wird.

Wird ein Signal aus einer bestimmten Richtung empfangen, dann liegt an der oberen Ebene des Speisenetzwerks 9 der Vektor $\vec{a}_2$ vor.

$$\tilde{S}_{12} = \tilde{S}_{21}^{\mathrm{T}}.$$

Da das Netzwerk 9 in der hier beschriebenen Ausgestaltung passiv ist, gilt

Somit transformiert sich $\vec{a}_2$ auf die untere Ebene des Speisenetzwerks 9 in der Form

$$\vec{b}_1 = \tilde{S}_{12}\, \vec{a}_2 = \tilde{S}_{21}^{\mathrm{T}}\, \vec{a}_2 = \begin{pmatrix} \vec{q}_1^{\mathrm{T}} \\ \vdots \\ \vec{q}_k^{\mathrm{T}} \\ \vdots \\ \vec{q}_m^{\mathrm{T}} \end{pmatrix} \vec{a}_2 \tag{9}$$

Der Term $\vec{q}_k^{\mathrm{T}}\, \vec{a}_2$ entspricht dabei der Projektion des Vektors der Empfangssignale der Antennenelemente 8 auf den Vektor $\vec{q}_k$, der zur Richtcharakteristik $\vec{C}_k$ führt. $\vec{a}_2$ wird somit in die Anteile zerlegt, die in den einzelnen $\vec{C}_k$ auftreten.

Es sei angenommen, dass die Vektoren $\vec{q}_k$ und $\vec{q}_l$ mit (k, l) = 1, ... m und k ungleich l paarweise orthogonal sind. Weiterhin soll ein Signal aus der Hauptstrahlungsrichtung der Charakteristik $\vec{C}_k$ empfangen werden. Daher gilt

$$\vec{a}_2 = c\, \vec{q}_k^{\,*}$$

mit einer beliebigen reellen Konstante c > 0, die als Maß für die Empfangsamplitude zu verstehen ist.

Dann ergibt sich $\vec{b}_1 = c\vec{a}_{1,k}$. Somit liegt nur an dem Antenneneingang 21 ein Signal an, das mit der Richtcharakteristik $\vec{C}_k$ korrespondiert. In den übrigen Charakteristiken $\vec{C}_l (l \neq k)$ sind keine Signalanteile enthalten.

Daher kann mithilfe des Signals $\vec{b}_1$, das das nach den einzelnen Richtcharakteristiken aufgeteilte Empfangssignal $\vec{a}_2$ beschreibt, auf die Einfallsrichtung des jeweils empfangenen Signals geschlossen werden.

Das Verfahren zur Identifikation gestaltet sich in einer Ausgestaltung wie folgt:

- Es wird eine Richtcharakteristik $\vec{C}_k$ geschaltet. Hierbei wird in einer Ausgestaltung insbesondere eines der Eingangstore 20 des Speisenetzwerks 9 ausgewählt und mit der Signalverarbeitungsvorrichtung 5 bzw. auch mit der Signalquelle 11 verbunden.
- Die Antennenvorrichtung 3 sendet ein Anregungs- oder Abfrage-Signal über die gewählte Richtcharakteristik aus.
- Die mit der Richtcharakteristik erreichten bzw. angeregten oder aufgeweckten Transponder 2 (oder RFID-Tags als Beispiele für die hier beschriebenen Sender) senden ein Antwortsignal zurück, das u. a. die Identifikation des Transponder enthält.
- Das Antwortsignal wird über die Antennenvorrichtung empfangen und der Teil des Signals, der mit der gewählten Richtcharakteristik $\vec{C}_k$ korrespondiert, steht dem Lesegerät als Ausgestaltung der Signalverarbeitungsvorrichtung 5 zur Verfügung.
- Das Lesegerät 5 wertet das Antwortsignal aus und stellt die Identifikation des Transponder und ein Maß für die Stärke des empfangenen Signals (RSSI-Wert) zur Verfügung.

Damit kann der Transponder (allgemein der Sender) zur aktuell gewählten (bzw. geschalteten) Richtcharakteristik zugeordnet werden.

Dieser Ablauf wird für mehrere Richtcharakteristiken 7 durchgeführt. Es werden also die Signalanteile in den einzelnen $\vec{C}_k$ nacheinander ausgelesen und die Transpondersignale bzw. die Amplitudenbeträge können den Richtcharakteristiken zugewiesen werden. Somit wird insgesamt ein Vektor für die Position des Senders konstruiert. Die Werte der Einträge ergeben sich aus den Beträgen der Feldstärken der jeweils empfangenen Signale und die Basisvektoren ergeben sich aus den zugeordneten Richtcharakteristiken, z. B. der jeweiligen Richtung der Keule.

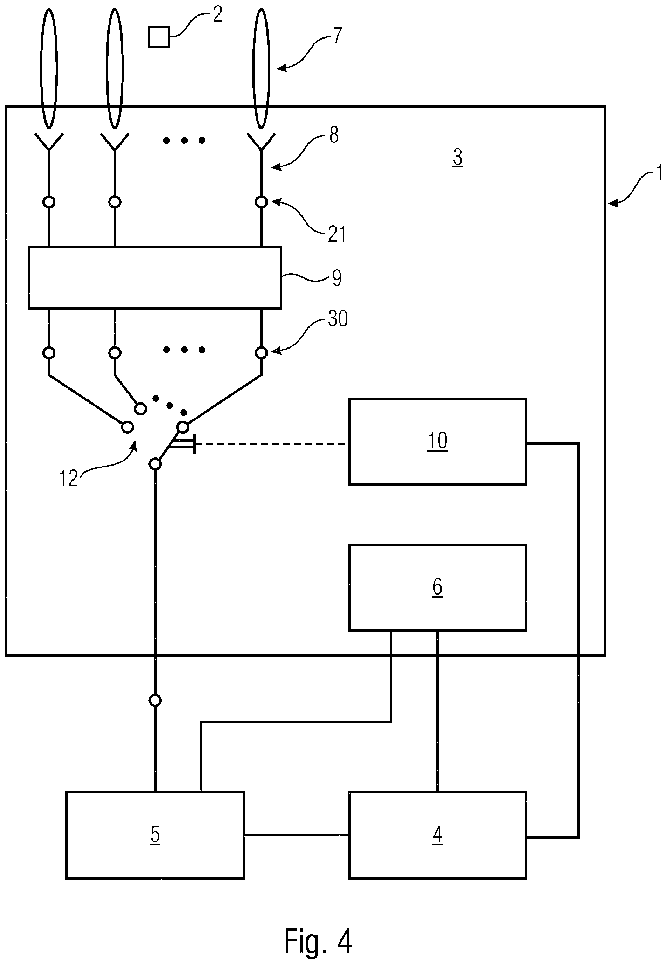

Die Fig. 4 zeigt eine alternative Ausgestaltung der Vorrichtung 1. Die Antennenvorrichtung 3 ist dabei ebenfalls als Mehrkeulenantenne ausgestaltet und weist die Steuerlogik 10 und die Datenverarbeitungsvorrichtung 6 (alternativ auch als Recheneinheit bezeichnet) auf.

Es folgt eine Betrachtung der Auswertung der empfangenen Signale bzw. der Ermittlung der Information über die Position des Senders 2.

Um die Richtung der Transponder (bzw. allgemein Sender und zwar unabhängig davon, ob es sich um aktive oder passive Sender handelt) bestimmen zu können, wäre es einfacher, wenn die Antwortsignale (oder allgemein die empfangenen Signale) in komplexer Form vorliegen, d. h. mit Betrag und Phase. Ein übliches RFID-Lesegerät (oder RFIDreceiver oder RFID-reader genannt) stellt jedoch lediglich Amplituden in Form von RSSI-Werten zur Verfügung. Mit der erfindungsgemäßen Vorrichtung und der Aufteilung des Ausleuchtbereichs $\Omega$ in die einzelnen Sektoren $\Omega_{ij}$ gemäß den Gleichungen (2) und (4) kann auf die komplexen Signale an den Antennenelementen 8 geschlossen werden, wie nachfolgend ausgeführt.

Anstatt der komplexen Signale $\vec{b}_1$ (vergleiche Gleichung (9) und Fig. 3) sind nach der oben beschriebenen Identifikation des Senders bzw. RFID-Tags die Amplituden der einzelnen Komponenten von $\vec{b}_1$. Man erhält also folgenden Vektor:

$$\hat{\vec{b}}_1 = \begin{pmatrix} \hat{b}_{1,1} \\ \vdots \\ \hat{b}_{1,k} \\ \vdots \\ \hat{b}_{1,m} \end{pmatrix} = \begin{pmatrix} |\vec{q}_1^{\mathsf{T}} \vec{a}_2| \\ \vdots \\ |\vec{q}_k^{\mathsf{T}} \vec{a}_2| \\ \vdots \\ |\vec{q}_m^{\mathsf{T}} \vec{a}_2| \end{pmatrix} \tag{10}$$

Wie $\vec{b}_1$ ist auch der Vektor $\hat{\vec{b}}_1$ von der Einfallsrichtung des Empfangssignal abhängig. Durch die eindeutige Zuordnung einer Richtcharakteristik $\vec{C}_k$ zu einem bestimmten Ausleuchtbereich $\Omega_{ij}$ ist jedoch zu jeder Einfallsrichtung auch ein eindeutiger Vektor von RSSI-Werten $\hat{\vec{b}}_1$ zuzuordnen.

Für eine bestimmte Einfallsrichtung $\vec{\omega_0}$ ergibt sich $\hat{\vec{b}}_1(\vec{\omega_0})$ nur für $\vec{\omega} = \vec{\omega_0}$ und für keine andere Einfallsrichtungen. Die Phase der Signale verbirgt sich somit inhärent in den einzelnen Richtcharakteristiken. Damit kann eine Abbildung der Form

$$f : \hat{\vec{b}}_1(\vec{\omega}) \mapsto \vec{b}_1(\vec{\omega}) \tag{11}$$

bzw.

$$f : \hat{\vec{b}}_1(\vec{\omega}) \mapsto \vec{a}_2(\vec{\omega}) \tag{12}$$

definiert werden.

Um die Zuordnung zwischen $\hat{\vec{b}}_1(\vec{\omega})$ und $\vec{b}_1(\vec{\omega})$ bzw. $\vec{a}_2(\vec{\omega})$ treffen zu können, müssen die möglichen komplexen Vektoren für verschiedene Einfallswinkel zunächst ermittelt werden. Es muss also die Richtcharakteristik und deren räumliche Verteilung der Empfangsempfindlichkeit (bzw. in der Regel damit auch deren Sendeempfindlichkeit) ermittelt werden. Dies kann durch Simulation oder Messung des Array erfolgen, bei der über dem Ausleuchtbereich $\Omega$ - gemäß der Definition in (1) - die Vektoren für alle Einfallswinkel aufgenommen werden. Die Ausleuchtbereich wird dabei diskret durchlaufen, so dass sich schließlich eine abzählbare (endliche) Menge von bekannten Einfallswinkeln $\vec{\omega_l}$ und damit Vektoren $\vec{b}_1^{(s)}(\vec{\omega_l})$ bzw. $\vec{a}_2^{(s)}(\vec{\omega_l})$ ergibt. Die Hochstellung von (s) zeigt an, dass es sich um die für diskrete Einfallswinkel ermittelten Vektoren handelt. Prinzipiell handelt es sich um Steering-Vektoren.

Die Zuordnung zum komplexen Vektor entspricht damit einer Suche, bei der im Sinne des kleinsten quadratischen Fehlers der komplexe Vektor $\vec{b}_1'^{(s)} = \tilde{S}^{\mathrm{T}} \vec{a}_2'^{(s)}$ ermittelt wird, für den die Norm:

$$\left\| \hat{\vec{b}}_1 - \hat{\vec{b}}_1^{(s)}(\vec{\omega_l}) \right\| \tag{13}$$

mit dem Vektor:

$$\hat{\vec{b}}_1^{(s)}(\vec{\omega_l}) = \begin{pmatrix} \left| b_{1,1}^{(s)}(\vec{\omega_l}) \right| \\ \vdots \\ \left| b_{1,k}^{(s)}(\vec{\omega_l}) \right| \\ \vdots \\ \left| b_{1,m}^{(s)}(\vec{\omega_l}) \right| \end{pmatrix} = \begin{pmatrix} \left| \vec{q}_1^{\mathrm{T}} \vec{a}_2^{(s)}(\vec{\omega_l}) \right| \\ \vdots \\ \left| \vec{q}_k^{\mathrm{T}} \vec{a}_2^{(s)}(\vec{\omega_l}) \right| \\ \vdots \\ \left| \vec{q}_m^{\mathrm{T}} \vec{a}_2^{(s)}(\vec{\omega_l}) \right| \end{pmatrix} \tag{14}$$

minimal wird.

Dies bedeutet:

$$\left\| \hat{\vec{b}}_1 - \hat{\vec{b}}_1'^{(s)} \right\| = \min_l \left\| \hat{\vec{b}}_1 - \hat{\vec{b}}_1^{(s)}(\vec{\omega}_l) \right\| \tag{15}$$

Wie aus der Gleichung (14) hervorgeht, können einerseits die Vektoren $\vec{a}_2^{(s)}(\vec{\omega}_l)$ an den Antennenfußpunkten gemessen und die Vektoren $\vec{b}_1^{(s)}(\vec{\omega}_l)$ rechnerisch über die Streumatrix $\tilde{S}_{21}^{\mathrm{T}}$ ermittelt werden. Es ist somit ausreichend, die Richtcharakteristiken der einzelnen Antennenelemente im Array ohne das Speisenetzwerk zu bestimmen. Andererseits können die Torrichtcharakteristiken des Array, d. h. mit Speisenetzwerk, gemessen und somit die Vektoren $\vec{b}_1^{(s)}(\vec{\omega}_l)$ direkt ermittelt werden.

Der Einfallswinkel $\vec{\omega} \in \{\vec{\omega}_l\}$ ergibt sich direkt aus dem komplexen Vektor $\vec{b}_1'^{(s)}$ bzw. $\vec{a}_2'^{(s)}$ oder aus einem beliebigen Richtungsschätzalgorithmus, der auf den Vektor angewendet wird. Es ist weiterhin möglich, einen zeitlichen Mittelwert über mehrere aufeinanderfolgende Einfallswinkel zu bestimmen, die über mehrere Schaltzyklen ermittelt werden. Damit verringert sich die Varianz des geschätzten Winkels und somit die Messunsicherheit. In der Praxis sind vorhandene Nebenmaxima der Richtcharakteristiken auf einen bestimmten maximalen Pegel bezogen auf den Pegel des Hauptmaximums in der Regel zu begrenzen, um robust gegenüber möglichen Unsicherheiten durch überlagertes Rauschen zu sein. Andernfalls können Mehrdeutigkeiten bei der Richtungsbestimmung auftreten.

Um die Eindeutigkeit der Funktionen (11) und (12) zu erhalten, ist es in einer Ausgestaltung vorgesehen, eine Mehrkeulenantenne einzusetzen, deren Richtcharakteristiken ein eindeutiges globales Maximum und sektorübergreifend keine Symmetrien in Form eines weiteren globalen Maximums innerhalb des Ausleuchtbereichs aufweisen. Die Kombination eines typischen oder üblichen RFID-Lesegeräts mit einer entsprechenden Mehrkeulenantenne erlaubt, auf das komplexwertige Empfangssignal zu schließen, ohne dass in das Lesegerät eingegriffen werden muss.

Die Abbildung Fig. 4 zeigt eine beispielhafte Architektur des entsprechenden Aufbaus der Vorrichtung 1, mit dem die verfügbaren Richtcharakteristiken $\vec{C}_k$ gemäß des oben beschriebenen Ablaufs ausgelesen und der Einfallswinkel der identifizierten Tags (bzw. Senders) 2 bestimmt werden kann. Die Mehrkeulenantenne 3 umfasst neben den Antennenelementen 8 und dem Speisenetzwerk 9 einen Hochfrequenzschalter (HF-Schalter) 12 und eine Steuerlogik 10. Mit Hilfe der Steuerlogik 10 wird über den HF-Schalter 12 die gewünschte Torrichtcharakteristik $\vec{C}_k$ (vergleiche Definition (5)) eingestellt. Über eine HF-Signalverbindung wird das zu sendende HF-Signal als Anregungssignal vom externen RFID-Lesegerät 5 (das somit die Signalquelle 11 der Ausgestaltung der Fig. 1 umfasst) und wird das Empfangssignal für das RFID-Lesegerät 5 bereitgestellt. Eine relativ zur Antennenvorrichtung 3 externe Steuervorrichtung 4 erlaubt die Steuerung des Lesegeräts 5 und der Mehrkeulenantenne 3. Die Datenverarbeitungsvorrichtung 6 als Teil der Antennenvorrichtung 3 bestimmt die Einfallsrichtung der Transpondersignale entsprechend der Gleichung (13). Die RSSI-Werte sowie die Transponder-Identifikation erhält sie vom RFID-Lesegerät 5. Bei typischen Installationen von RFID-Lesegeräten 5 mit Steuereinheit hat die dargestellte Ausgestaltung den Vorteil, dass lediglich die vorhandene Antenne durch die Antennenvorrichtung 3 mit Steuerlogik 10 und Datenverarbeitungsvorrichtung 6 zu ersetzen ist - zusätzliche Komponenten sind nicht notwendig.

Die Erfindung sei noch einmal mit anderen Worten beschrieben:
Die Erfindung ermöglicht in einer Ausgestaltung eine Ermittlung einer Information über eine Position des Senders, wobei es sich zumindest um eine Aussage über eine Richtung des Senders handelt. Dies geschieht basierend auf RSSI-Werten (oder allgemein nur mit Amplitudenwerten der empfangenen Signale) in Kombination mit einer Mehrkeulenantenne.

Daraus ergeben sich u. a. folgende Vorteile:

Unter Zuhilfenahme einer Recheneinheit oder Datenverarbeitungsvorrichtung, die in einer Ausgestaltung in der Mehrkeulenantenne beherbergt ist, ist in einer Ausgestaltung ein einzelner HF-Pfad zwischen Mehrkeulenantenne und RFID-Lesegerät ausreichend für die Richtungsschätzung.

Dies bringt es mit sich, dass in einer Ausgestaltung nur ein RFID-Lesegerät eingesetzt wird, das nur ein Tor aufweist. Ein solches Lesegerät ist im Allgemeinen kostengünstiger als ein RFID-Lesegerät mit mehreren Toren. Weiterhin sind in einer Ausgestaltung keine zusätzlichen Infrastrukturkomponenten zur Umschaltung und Berechnung notwendig, da Umschaltung und Richtungsschätzung funktional durch die Mehrkeulenantenne selbst abgedeckt werden.

Die Anzahl der Antennenelemente bzw. Richtcharakteristiken und die Aufteilung des Ausleuchtbereichs kann beliebig gewählt werden. Mit zunehmender Anzahl an Elementen und Sektoren kann die Genauigkeit der Richtungsschätzung erhöht werden. Diese kann somit an den jeweiligen Anwendungsfall angepasst werden.

Als Signalverarbeitungsvorrichtung kann ein (handels)übliches Standard-RFID-Lesegerät verwendet werden. Solche stellen zu jedem identifizierten Transponder einen RSSI-Wert bereit.

Erfindungsgemäß ist es unter Verwendung einer Antennenvorrichtung mit unterschiedlichen schaltbaren bzw. wählbaren Richtcharakteristiken (also in einer Ausgestaltung der Mehrkeulenantenne) und einer entsprechenden Partitionierung des Ausleuchtbereichs möglich, auf die Messung komplexer Signale zu verzichten. Ein Teil der Signalverarbeitung erfolgt quasi durch die Antennenvorrichtung und deren Richtcharakteristiken, so dass die RSSI-Werte (bzw. allgemein die Amplitudenwerte) für die Positionsbestimmung bzw. zumindest für die Richtungsschätzung ausreichend sind.

Insgesamt ergeben sich folgende Vorteile:

- Die Genauigkeit der Ergebnisse hängt nicht oder deutlich geringer von der Richtwirkung der einzelnen Antennenelemente ab. Dies baut darauf, dass die mit den einzelnen Richtcharakteristiken und daher mit den einzelnen Antennenelementen empfangenen Signale insgesamt zu einem Vektor für die Position des Senders verarbeitet werden.

- Gegenüber Lösungen mit mechanischer Nachführung von Richtantennen erlaubt die Erfindung eine kompaktere Realisierung mit geringeren Ansprechzeiten, zudem ohne mechanischen Aufwand oder Verschleiß. Dies insbesondere für die Ausgestaltung, dass die Antennenvorrichtung eine Patchantenne ist.

- Gegenüber Lösungen, bei denen mehrere Empfangsknoten räumlich verteilt werden, ist ein einzelner Empfangsknoten ausreichend. Es reicht somit eine Signalverarbeitungsvorrichtung, z. B. ein RFID-Lesegerät aus. Die Genauigkeit wird nicht ausschließlich durch die Anzahl der Knoten bestimmt, sondern durch die Anzahl von Antennenelementen im Array und die Anzahl der Sektoren.

Technische Anwendungsgebiete der Erfindung sind beispielsweise Logistik, Produktion, Tordurchfahrten u. a. mit Pulklesung (Erfassung vieler Transponder in kurzer Zeit), automatisierte Inventur oder Personenkontrollen (z. B. Healthcare).

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC oder beispielsweise ein Mikroprozessor, z. B. in Form einer ARM-Architektur.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Referenzen:

[1] Kalis et al., "Direction Finding in IEEE802.11 Wireless Networks", IEEE Transactions on Instrumentation and Measurement, vol. 51, no. 5, Seiten 940 - 948, 2002.

[2] B. N. Hood et al., "Estimating DoA From Radio-Frequency RSSI Measurements Using an Actuated Reflector, IEEE Sensors Journal, vol. 11, no. 2, Seiten 413 - 417, 2011.

[3] G. Giorgetti et al., "Single-Anchor Indoor Localization Using a Switched-Beam Antenna", IEEE Communications Letters, vol. 13, no. 1, Seiten 1 - 3, 2009.

[4] M. Passafiume et al., "On the duality of Phase-based and Phase-less RSSI MUSIC algorithm for Direction of Arrival estimation", Proc. of the 3rd International Conference on Circuits, Systems, Communications, Computers and Applications (CSCCA), Seiten 48 - 54, 2014.

[5] D. L. Nguyen, "Switched Beam Array Antenna for 2.45 GHz RFID Localisation", Dissertation, The University of Hull, 2011.

[6] C. Volmer et al., "An Eigen-Analysis of Compact Antenna Arrays and Its Application to Port Decoupling", IEEE transactions on antennas and propagation, vol. 56, no. 2, Seiten 360 - 370, 2008.

[7] Shelton, J. and Kelleher, K. S., "Multiple beams from linear arrays", IRE transactions on antennas and propagation, vol. 9, no. 2, Seiten 154 - 161, 1961.

**Patentansprüche**

1. Vorrichtung (1) zur Bestimmung mindestens einer Information über eine Position mindestens eines Senders (2), mit einer Antennenvorrichtung (3), einer Steuervorrichtung (4), einer Signalverarbeitungsvorrichtung (5) und einer Datenverarbeitungsvorrichtung (6),
wobei die Antennenvorrichtung (3) mehrere unterschiedliche Richtcharakteristiken (7) aufweist,
wobei die Richtcharakteristiken (7) sich jeweils zumindest auf eine Menge an räumlich unterschiedlichen Empfangsempfindlichkeiten der Antennenvorrichtung (3) beziehen,
wobei die Antennenvorrichtung (3) derartig ausgestaltet ist, mit unterschiedlichen Richtcharakteristiken jeweils mindestens ein Signal von dem Sender (2) zu empfangen,
wobei die Antennenvorrichtung (3) ein Speisenetzwerk (9) aufweist,
wobei das Speisenetzwerk (9) die unterschiedlichen Richtcharakteristiken (7) der Antennenvorrichtung (3) bewirkt,
wobei das Speisenetzwerk (9) derartig ausgestaltet ist, von der Antennenvorrichtung (3) empfangene Signale entsprechend den Richtcharakteristiken (7) aufgeteilt auszugeben,
wobei die Antennenvorrichtung (3) derartig ausgestaltet ist, dass die Richtcharakteristiken (7) jeweils ein globales Maximum aufweisen, das jeweils in einem durch ein Paar eines Azimutwinkels und eines Co-Elevationswinkels bestimmten eigenen Sektor in einem der Antennenvorrichtung (3) zugeordneten Ausleuchtbereich liegt, wobei die Antennenvorrichtung (3) derartig ausgestaltet ist, dass die Richtcharakteristiken (7) jeweils ein Nebenmaximum aufweisen, das jeweils in einem Sektor liegt, der sich von dem unterscheidet, in dem das globale Maximum liegt, und das einen vorgebbaren Pegelabstand zu einem Pegel des globalen Maximums aufweist,
wobei die Signalverarbeitungsvorrichtung (5) derartig ausgestaltet ist, die von der Antennenvorrichtung (3) empfangenen Signale zu verarbeiten und jeweils einen Amplitudenwert einer Feldstärke des empfangenen Signals zu ermitteln,
wobei die Datenverarbeitungsvorrichtung (6) derartig ausgestaltet ist, basierend auf den Richtcharakteristiken (7) und den aus den jeweils zugeordneten empfangenen Signalen ermittelten Amplitudenwerten die Information über die Position des Senders (2) zu ermitteln, und
wobei die Datenverarbeitungsvorrichtung (6) derartig ausgestaltet ist, aus den ermittelten Amplitudenwerten in vektorieller Form und Daten über die Richtcharakteristiken (7) eine Aussage über eine Richtung des Senders (2) relativ zur Antennenvorrichtung (3) als Information über die Position des Senders (2) zu ermitteln,
**dadurch gekennzeichnet, dass**
die Steuervorrichtung (4) derartig ausgestaltet ist, die durch das Speisenetzwerk (9) bewirkten unterschiedlichen Richtcharakteristiken zum Empfangen von von dem Sender (2) ausgehenden Signalen zu schalten,
wobei das Speisenetzwerk (9) zum Einstellen einer gewünschten Richtcharakteristik (7) der Richtcharakteristiken (7) an einer Mehrkeulenantenne der Antennenvorrichtung (3) ausgebildet ist, und
wobei für die Signalverarbeitungsvorrichtung (5) die jeweils gewünschte Richtcharakteristik (7) geschaltet wird, indem eine Verbindung zwischen einem Signaleingang (20) des Speisenetzwerks (9) der jeweils gewünschten Richtcharakteristik (7) und der Signalverarbeitungsvorrichtung (5) hergestellt wird.

2. Vorrichtung (1) nach Anspruch 1,
wobei es sich bei der Signalverarbeitungsvorrichtung (5) um ein RFID-Lesegerät handelt, das als Amplitudenwert der Feldstärke der empfangenen Signale einen "Received Signal Strength Indication" (RSSI)-Wert erzeugt.

3. Vorrichtung (1) nach Anspruch 1 oder 2,
wobei die Signalverarbeitungsvorrichtung (5) derartig ausgestaltet ist, den Sender (2) zu identifizieren.

4. Vorrichtung (1) nach einem der Ansprüche 1 bis 3,
wobei die Vorrichtung (1) eine Signalquelle (11) aufweist,
wobei die Signalquelle (11) derartig ausgestaltet ist, ein Anregungssignal zu erzeugen, und
wobei die Steuervorrichtung (4) derartig ausgestaltet ist, jeweils eine Richtcharakteristik (7) für das Abstrahlen des Anregungssignals zu schalten.

5. Vorrichtung (1) nach Anspruch 4,
wobei die Steuervorrichtung (4) derartig ausgestaltet ist, die für das Abstrahlen des Anregungssignals geschaltete Richtcharakteristik als Richtcharakteristik für das Empfangen des von dem Sender (2) ausgehenden Signals zu schalten.

6. Vorrichtung (1) nach einem der Ansprüche 1 bis 5,
wobei die Antennenvorrichtung (3) mehrere Antennenelemente (8) aufweist.

7. Vorrichtung (1) nach einem der Ansprüche 1 bis 6,
wobei die Antennenvorrichtung (3) als Mehrkeulenantenne ausgestaltet ist.

8. Verfahren zur Bestimmung mindestens einer Information über eine Position mindestens eines Senders (2),
wobei mit von einem Speisenetzwerk (9) einer Antennenvorrichtung (3) bewirkten unterschiedlichen Richtcharakteristiken (7) der Antennenvorrichtung (3), die sich jeweils auf räumlich unterschiedliche Empfangsempfindlichkeiten beziehen, von dem Sender (2) ausgehende Signale empfangen werden, wobei die Richtcharakteristiken (7) jeweils ein globales Maximum, das jeweils in einem durch ein Paar eines Azimutwinkels und eines Co-Elevationswinkels bestimmten eigenen Sektor eines Ausleuchtbereichs liegt, und jeweils ein Nebenmaximum aufweisen, das jeweils in einem Sektor liegt, der sich von dem unterscheidet, in dem das globale Maximum liegt, und das einen vorgebbaren Pegelabstand zu einem Pegel des globalen Maximums aufweist,
wobei jeweils ein Amplitudenwert einer Feldstärke der empfangenen Signale ermittelt wird, und
wobei ausgehend von Daten über die Richtcharakteristiken (7) und den jeweils aus den zugeordneten empfangenen Signalen ermittelten Amplitudenwerten in vektorieller Form eine Aussage über eine Richtung des Senders (2) relativ zur Antennenvorrichtung (3) als Information über die Position des Senders (2) ermittelt wird
**dadurch gekennzeichnet, dass**
die durch das Speisenetzwerk (9) bewirkten unterschiedlichen Richtcharakteristiken zum Empfangen von von dem Sender (2) ausgehenden Signalen durch eine Steuervorrichtung (4) geschaltet werden, wobei eine gewünschte Richtcharakteristik (7) der Richtcharakteristiken (7) an einer Mehrkeulenantenne der Antennenvorrichtung (3) durch das Speisenetzwerk (9) eingestellt wird, und
wobei für die Signalverarbeitungsvorrichtung (5) die jeweils gewünschte Richtcharakteristik (7) geschaltet wird, indem eine Verbindung zwischen einem Signaleingang (20) des Speisenetzwerks (9) der jeweils gewünschten Richtcharakteristik (7) und der Signalverarbeitungsvorrichtung (5) hergestellt wird.

**Claims**

1. A device (1) for determining at least one piece of information on a position of at least one transmitter (2),
comprising an antenna device (3), a control device (4), a signal processing device (5) and a data processing device (6),
wherein the antenna device (3) comprises several different directional characteristics (7),
wherein the directional characteristics (7) each relate to at least a set of spatially different receive sensitivities of the antenna device (3),
wherein the antenna device (3) is configured to receive at least one respective signal from the transmitter (2) with different directional characteristics,
wherein the antenna device (3) comprises a feed network (9),
the feed network (9) causing different directional characteristics (7) of the antenna device (3),
wherein the feed network (9) is configured to output signals received from the antenna device (3) in a manner partitioned in correspondence with the directional characteristics (7),
wherein the antenna device (3) is configured such that the directional characteristics (7) each comprise a global maximum which is located each in a certain sector, determined by a pair of an azimuth angle and a co-elevation angle, in an irradiation region associated to the antenna device (3),
wherein the antenna device (3) is configured such that the directional characteristics (7) each comprise a side maximum which is located each in a sector differing from that sector where the global maximum is located, and which comprises a predeterminable level distance to a level of the global maximum,
wherein the signal processing device (5) is configured to process the signals received from the antenna device (3) and establish a respective amplitude value of a field strength of the signal received,
wherein the data processing device (6) is configured to establish the information on the position of the transmitter (2) based on the directional characteristics (7) and the amplitude values established from the respective associated signals received, and
wherein the data processing device (6) is configured to establish a statement on a direction of the transmitter (2) relative to the antenna device (3) as information on the position of the transmitter (2) from the amplitude values established in a vector form and data on the directional characteristics (7),
**characterized in that**
the control device (4) is configured to switch the different directional characteristics, which are caused by the feed network (9), for receiving signals emanating from the transmitter (2),

the feed network (9) being configured to set a desired directional characteristic (7) of the directional characteristics (7) at a multibeam antenna of the antenna device (3), and

the respectively desired directional characteristic (7) being switched, for the signal processing device (5), by establishing a connection between a signal input (20) of the feed network (9) of the respectively desired directional characteristic (7) and the signal processing device (5).

2. The device (1) in accordance with claim 1,
wherein the signal processing device (5) is an RFID reader which generates a "received signal strength indication" (RSSI) value as an amplitude value of the field strength of the signals received.

3. The device (1) in accordance with claim 1 or 2,
wherein the signal processing device (5) is configured to identify the transmitter (2).

4. The device (1) in accordance with any of claims 1 to 3,
the device (1) comprising a signal source (11),
wherein the signal source (11) is configured to generate an excitation signal, and wherein the control device (4) is configured to switch a respective directional characteristic (7) for radiating the excitation signal.

5. The device (1) in accordance with claim 4,
wherein the control device (4) is configured to switch the directional characteristic switched for radiating the excitation signal as a directional characteristic for receiving the signal emanating from the transmitter (2).

6. The device (1) in accordance with any of claims 1 to 5,
wherein the antenna device (3) comprises several antenna elements (8).

7. The device (1) in accordance with any of claims 1 to 6,
wherein the antenna device (3) is implemented as a multibeam antenna.

8. A method for determining at least one piece of information on a position of at least one transmitter (2),
wherein signals emanating from the transmitter (2) are received with different directional characteristics (7) of an antenna device (3), caused by a feed network (9) of the antenna device (3), which each relate to spatially different receive sensitivities,
wherein the directional characteristics (7) each comprise a global maximum which is located each in a certain sector, determined by a pair of an azimuth angle and a co-elevation angle, of an irradiation region, and a side maximum which is located each in a sector differing from that sector where the global maximum is located, and which comprises a predeterminable level distance to a level of the global maximum,
wherein a respective amplitude value of a field strength of the signals received is established, and
wherein a statement on a direction of the transmitter (2) relative to the antenna device (3) as information on the position of the transmitter (2) is established starting from data on the directional characteristics (7) and the amplitude value established from the respective associated signals received in a vector form,
**characterized in that**
the different directional characteristics caused by the feed network (9) are switched, by the control device (4), for receiving signals emanating from the transmitter (2),
a desired directional characteristic (7) of the directional characteristics (7) being set, by the feed network (9), at a multibeam antenna of the antenna device (3), and the respectively desired directional characteristic (7) being switched, for the signal processing device (5), by establishing a connection between a signal input (20) of the feed network (9) of the respectively desired directional characteristic (7) and the signal processing device (5).

**Revendications**

1. Dispositif (1) pour déterminer au moins une information sur une position d'au moins un émetteur (2),
avec un dispositif d'antenne (3), un dispositif de commande (4), un dispositif de traitement de signal (5) et un dispositif de traitement de données (6),
dans lequel le dispositif d'antenne (3) présente plusieurs caractéristiques directionnelles différentes (7),
dans lequel les caractéristiques directionnelles (7) se rapportent, chacune, au moins à une quantité de sensibilités de réception spatialement différentes du dispositif d'antenne (3),
dans lequel le dispositif d'antenne (3) est conçu pour recevoir avec des caractéristiques directionnelles différentes

16

chaque fois au moins un signal de l'émetteur (2),
dans lequel le dispositif d'antenne (3) présente un réseau d'alimentation (9),
dans lequel le réseau d'alimentation (9) provoque les caractéristiques directionnelles différentes (7) du dispositif d'antenne (3),
dans lequel le réseau d'alimentation (9) est conçu pour émettre les signaux reçus du dispositif d'antenne (3) de manière divisée selon les caractéristiques directionnelles (7),
dans lequel le dispositif d'antenne (3) est conçu de sorte que les caractéristiques directionnelles (7) présentent, chacune, un maximum global qui se situe respectivement dans un secteur propre déterminé par une paire d'un angle d'azimut et d'un angle de co-élévation dans une zone d'éclairage associée au dispositif d'antenne (3), dans lequel le dispositif d'antenne (3) est conçu de sorte que les caractéristiques directionnelles (7) présentent, chacune, un maximum secondaire qui se situe respectivement dans un secteur qui diffère de celui dans lequel se situe le maximum global et qui présente une distance de niveau pouvant être prédéterminée par rapport à un niveau du maximum global, dans lequel le dispositif de traitement de signal (5) est conçu pour traiter les signaux reçus du dispositif d'antenne (3) et pour déterminer respectivement une valeur d'amplitude d'une intensité de champ du signal reçu,
dans lequel le dispositif de traitement de données (6) est conçu pour déterminer, sur base des caractéristiques directionnelles (7) et des valeurs d'amplitude déterminées à partir des signaux reçus associés respectivement, l'information sur la position de l'émetteur (2), et
dans lequel le dispositif de traitement de données (6) est conçu pour déterminer, à partir des valeurs d'amplitude déterminées sous forme vectorielle et des données sur les caractéristiques directionnelles (7), une affirmation sur une direction de l'émetteur (2) par rapport au dispositif d'antenne (3) comme information sur la position de l'émetteur (2),
**caractérisé par le fait que**
le dispositif de commande (4) est conçu pour commuter les différentes caractéristiques directionnelles, provoquées par le réseau d'alimentation (9), pour recevoir les signaux émis par l'émetteur (2),
dans lequel le réseau d'alimentation (9) est conçu pour régler une caractéristique directionnelle souhaitée (7) parmi les caractéristiques directionnelles (7) sur une antenne à lobes multiples du dispositif d'antenne (3), et
dans lequel est commutée, pour le dispositif de traitement du signal (5), la caractéristique directionnelle souhaitée respective (7) en établissant une connexion entre une entrée de signal (20) du réseau d'alimentation (9) de la caractéristique directionnelle souhaitée respective (7) et le dispositif de traitement de signal (5).

2. Dispositif (1) selon la revendication 1,
dans lequel il s'agit, pour le dispositif de traitement de signal (5), d'un dispositif de lecture RFID qui génère, comme valeur d'amplitude de l'intensité de champ des signaux reçus, une valeur (RSSI) "Received Signal Strength Indication" (= d'Indication d'Intensité de Signal Reçu).

3. Dispositif (1) selon la revendication 1 ou 2,
dans lequel le dispositif de traitement du signal (5) est conçu pour identifier l'émetteur (2).

4. Dispositif (1) selon l'une des revendications 1 à 3,
dans lequel le dispositif (1) présente une source de signal (11), dans lequel la source de signal (11) est conçue pour générer un signal d'excitation, et
dans lequel le dispositif de commande (4) est conçu pour commuter chaque fois une caractéristique directionnelle (7) pour émettre le signal d'excitation.

5. Dispositif (1) selon la revendication 4,
dans lequel le dispositif de commande (4) est conçu pour commuter la caractéristique directionnelle commutée pour émettre le signal d'excitation comme caractéristique directionnelle pour recevoir le signal émis par l'émetteur (2).

6. Dispositif (1) selon l'une des revendications 1 à 5,
dans lequel le dispositif d'antenne (3) présente plusieurs éléments d'antenne (8).

7. Dispositif (1) selon l'une des revendications 1 à 6,
dans lequel le dispositif d'antenne (3) est conçu comme antenne à lobes multiples.

8. Procédé pour déterminer au moins une information sur une position d'au moins un émetteur (2),
dans lequel sont reçus des signaux émis par l'émetteur (2) avec différentes caractéristiques directionnelles (7) d'un dispositif d'antenne (3) provoquées par un réseau d'alimentation (9) du dispositif d'antenne (3) qui se rapportent respectivement à des sensibilités de réception spatialement différentes,

dans lequel les caractéristiques directionnelles (7) présentent, chacune, un maximum global qui se situe respectivement dans un secteur propre déterminé par une paire d'un angle d'azimut et d'un angle de co-élévation et, chacune, un maximum secondaire qui se situe respectivement dans un secteur qui diffère de celui dans lequel se situe le maximum global et qui présente une distance de niveau pouvant être prédéterminée par rapport à un niveau du maximum global,

dans lequel est chaque fois déterminée une valeur d'amplitude d'une intensité de champ des signaux reçus, et

dans lequel, partant des données sur les caractéristiques directionnelles (7) et des valeurs d'amplitude déterminées respectivement à partir des signaux reçus associés sous forme vectorielle, est déterminée une affirmation sur une direction de l'émetteur (2) par rapport au dispositif d'antenne (3) comme information sur la position de l'émetteur (2),

**caractérisé par le fait que**

les différentes caractéristiques directionnelles provoquées par le réseau d'alimentation (9) sont commutées, par un dispositif de commande (4), pour recevoir les signaux émis par l'émetteur (2), dans lequel une caractéristique directionnelle souhaitée (7) parmi les caractéristiques directionnelles (7) est réglée sur une antenne à lobes multiples du dispositif d'antenne (3) par le réseau d'alimentation (9), et

dans lequel est commutée, pour le dispositif de traitement du signal (5), la caractéristique directionnelle souhaitée respective (7) en établissant une connexion entre une entrée de signal (20) du réseau d'alimentation (9) de la caractéristique directionnelle souhaitée respective (7) et le dispositif de traitement de signal (5).

Fig. 1

Fig. 2

Fig. 3

Fig. 4

**EP 3 414 589 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8433337 B2
- US 2010309058 A1
- US 5907809 A

**In der Beschreibung aufgeführte Nicht-Patentliteratur**

- **KALIS et al.** Direction Finding in IEEE802.11 Wireless Networks. *IEEE Transactions on Instrumentation and Measurement,* 2002, vol. 51 (5), 940-948
- **B. N. HOOD et al.** Estimating DoA From Radio-Frequency RSSI Measurements Using an Actuated Reflector. *IEEE Sensors Journal,* 2011, vol. 11 (2), 413-417
- **G. GIORGETTI et al.** Single-Anchor Indoor Localization Using a Switched-Beam Antenna. *IEEE Communications Letters,* 2009, vol. 13 (1), 1-3
- **M. PASSAFIUME et al.** On the duality of Phase-based and Phase-less RSSI MUSIC algorithm for Direction of Arrival estimation. *Proc. of the 3rd International Conference on Circuits, Systems, Communications, Computers and Applications (CSCCA),* 2014, 48-54
- Switched Beam Array Antenna for 2.45 GHz RFID Localisation. **D. L. NGUYEN.** Dissertation. The University of Hull, 2011
- **C. VOLMER et al.** An Eigen-Analysis of Compact Antenna Arrays and Its Application to Port Decoupling. *IEEE transactions on antennas and propagation,* 2008, vol. 56 (2), 360-370
- **SHELTON, J. ; KELLEHER, K. S.** Multiple beams from linear arrays. *IRE transactions on antennas and propagation,* 1961, vol. 9 (2), 154-161

23